## Europäisches Patentamt

## European Patent Office

## Office européen des brevets

(11) Numéro de publication: **0 177 104**
**B1**

## FASCICULE DE BREVET EUROPEEN

(45) Date de publication du fascicule du brevet:
01.03.89

(51) Int. Cl.⁴: **G 02 B 6/42**

(21) Numéro de dépôt: 85201575.9

(22) Date de dépôt: 01.10.85

(54) Dispositif de couplage d'une source lumineuse et d'un guide d'onde lumineuse.

(30) Priorité: 05.10.84 FR 8415311

(43) Date de publication de la demande:
09.04.86 Bulletin 86/15

(45) Mention de la délivrance du brevet:
01.03.89 Bulletin 89/9

(84) Etats contractants désignés:
DE FR GB IT SE

(56) Documents cités:
US-A- 3 932 184

PATENTS ABSTRACTS OF JAPAN, vol. 7, no. 65 (E-165)
[1210], 18 mars 1983; & JP - A - 57 211 288 (NIPPON
DENSHIN DENWA KOSHA) 25-12-1982
PATENTS ABSTRACTS OF JAPAN, vol. 6, no. 144, 3 août
1982, page 122; & JP - A - 57 66 686 (NIPPON DENSHIN
DENWA KOSHA) 22.04.1982
IEEE TRANSACTIONS ON MICROWAVE THEORY AND
TECHNIQUES, vol. MTT-30, no. 2, février 1982, pages
121-131, New York, US; K. SHIRAHATA et al.: "Recent
developments in fiber optic devices"
LASER FOCUS, vol. 17, no. 11, novembre 1981, pages
119-120, New York, US; "Fiberscan. Singlemode fiber
with consistent quality made in Britain and Japan"
PATENTS ABSTRACTS OF JAPAN, vol. 3, no. 36, 27 mars
1979, page 5 E 100; & JP - A - 54 13 356 (SUMITOMO
DENKI KOGYO K.K.) 31-01-1979

(73) Titulaire: Laboratoires d'Electronique et de Physique
Appliquée L.E.P., 3, Avenue Descartes,
F-94450 Limeil-Brévannes (FR)
(84) Etats contractants désignés: FR

(73) Titulaire: N.V. Philips' Gloeilampenfabrieken,
Groenewoudseweg 1, NL-5621 BA Eindhoven (NL)
(84) Etats contractants désignés: DE GB IT SE

(72) Inventeur: Hily, Claude Emile, Société Civile
S.P.I.D. 209 rue de l'Université, F-75007 Paris (FR)
Inventeur: Michel, Jaqueline-Madeleine, Société Civile
S.P.I.D. 209 rue de l'Université, F-75007 Paris (FR)

(74) Mandataire: Landousy, Christian et al, Société Civile
S.P.I.D. 209, Rue de l'Université, F-75007 Paris (FR)

## Description

L'invention concerne un dispositif de couplage d'une source lumineuse et d'un guide d'onde lumineuse, la surface émettrice de la source lumineuse présentant des dimensions de même ordre de grandeur que celles du cœur du guide d'onde, ou bien des dimensions inférieures, ce dispositif incluant une première optique convergente constituée par une lentille de forme complètement sphérique, dite lentille-boule.

L'invention trouve son application dans le couplage des diodes électroluminescentes et des fibres optiques à gradient d'indice par exemple, et ceci particulièrement dans les domaines où un montage d'étanchéité est recherché pour la diode électroluminescente.

Or un dispositif de couplage d'une diode électroluminescente et d'une fibre optique du type à saut d'indice est connu de l'art antérieur par la publication de J.P. Cabanié et de J.J. Hunzinger dans la revue ACTA ELECTRONICA, 24, 1, 1981/1982, pages 105 à 116.

Ce document décrit l'utilisation de systèmes optiques collimateurs destinés à permettre de saturer au mieux l'étendue géométrique de la fibre optique.

L'un de ces systèmes, donné comme un exemple de réalisation préférentielle comprend une lentille entièrement sphérique, dite lentille-boule, en contact avec la surface émettrice de la diode électroluminescente.

Cette lentille-boule est donnée comme très performante puisqu'elle permet d'atteindre un gain de l'ordre de 5.89 sur les étendues géométriques, mais elle présente en revanche de nombreux inconvénients.

Tout d'abord, l'ouverture numérique de cette lentille-boule est très importante, ce qui introduit des aberrations géométriques. Ensuite, le diamètre de cette lentille-boule est très faible, de manière à limiter les pertes d'insertion, ce qui entraîne des difficultés de manipulation durant les réglages optiques du dispositif. De plus, les trois éléments constitués par la fibre, la lentille-boule et la diode électroluminescente doivent être en contact, ce qui engendre au sein du matériau constituant la diode électroluminescente des contraintes préjudiciables à la durée de vie de cette dernière.

On remarquera en outre que ce dispositif n'est pas adapté à l'utilisation des fibres à gradient d'indice. Le document cité préconise d'ailleurs le montage d'une fibre de ce type purement et simplement en contact avec la surface de la diode électroluminescente.

Mais ce dernier montage est impossible lorsque la diode électroluminescente présente une surface émissive enterrée, et il engendre les mêmes détériorations mécaniques que le montage à lentille-boule préconisé pour les fibres du type à saut d'indice.

Enfin ni l'une ni l'autre de ces méthodes n'offre des moyens de réglage aisé, non plus que des moyens pour réaliser l'étanchéité de la diode électroluminescente.

C'est pourquoi la présente invention propose un nouveau dispositif de couplage tel que défini dans le préambule remarquable en ce qu'il comprend en outre une seconde optique convergente, dite de transport, qui peut fournir une image, en grandissement voisin de $-1$, de la face d'entrée du guide d'onde, dans le centre optique de la lentille-boule, et en ce que l'indice de réfraction et le diamètre de la lentille-boule sont choisis de manière à ce que les rayons issus de chaque point de la surface émettrice entrent dans le guide d'onde sous la forme de faisceaux de rayons parallèles, la face émettrice se trouvant au foyer objet du dispositif de couplage.

Le dispositif selon l'invention produit alors les avantages suivants:

– les pertes d'insertion sont pratiquement nulles et les tolérances de montage sont peu sévères;

– les réglages sont aisés du fait que les tolérances de montage sont peu sévères et du fait qu'ils se font sur l'optique de transport et non sur la lentille-boule, les dimensions des éléments de l'optique de transport rendant ces éléments facilement manipulables;

– la distance entre la face d'entrée du guide d'onde lumineuse et la première face de l'optique de transport est suffisamment grande pour permettre d'insérer aisément la fenêtre d'un dispositif d'étanchéité englobant la source lumineuse et permettant d'utiliser cette dernière dans une ambiance spéciale;

– une source lumineuse de surface émissive très petite davant la surface utile de la face d'entrée du guide d'onde lumineuse peut être utilisée;

– la surface émissive de la source lumineuse peut se trouver à une petite distance en arrière des parois externes de cette source lumineuse, et en particulier une diode électroluminescente à surface émissive légèrement enterrée peut être utilisée comme source lumineuse;

– le guide d'onde lumineuse peut être une fibre optique à gradient d'indice;

– les aberrations géométriques dues à l'ouverture de la lentille-boule sont fortement diminuées.

Dans une forme de réalisation de l'invention, ce dispositif est remarquable en ce que la lentille-boule est maintenue en contact avec la source lumineuse à l'aide d'une colle, dont l'indice de réfraction présente une valeur comprise entre celle de l'indice de réfraction de la lentille-boule et celle de l'indice de réfraction de la surface émettrice de la source lumineuse, ou bien une valeur aussi proche que possible de cette fourchette de valeurs idéales.

Dans ces conditions, la détérioration de la source lumineuse lors des réglages n'est pas possible, ce qui est extrêmement avantageux si cette source est une diode électroluminescente en arséniure de gallium (GaAs), cette dernière étant particulièrement fragile.

Dans une forme de réalisation de l'invention, ce dispositif est remarquable en ce que l'optique de transport est constituée de deux lentilles plan-convexes identiques, dont les faces convexes sont tournées en regard l'une de l'autre et en contact, la face plane de l'une de ces lentilles, dite première lentille, étant tournée vers la face d'entrée du guide d'onde et étant placée à une distance optique D de cette dernière, la face plane de l'autre lentille dite seconde lentille étant tournée vers la lentille-boule et étant placée à la même distance optique D du centre optique de cette dernière, et l'axe optique des deux lentilles passant par le centre optique de la lentille-boule et coïncidant avec les perpendiculaires aux centres de la face d'entrée du guide d'onde d'une part et de la face émettrice de la source lumineuse d'autre part.

Dans ces conditions, cette optique de transport est d'une réalisation industrielle aisée, rendant l'ensemble du dispositif de couplage d'une fabrication aisée et d'un coût faible, ce qui est très important devant l'ampleur du développement industriel qui s'ouvre dans le domaine des guides de lumière.

Dans une forme de réalisation, ce dispositif est remarquable en ce que la source lumineuse est une diode électroluminescente.

Dans une forme de réalisation, ce dispositif est remarquable en ce que la diode électroluminescente présente une surface émissive dont le diamètre est de l'ordre de 30 $\mu m$, cette surface émissive étant enterrée d'au plus 5 $\mu m$ par rapport à la surface externe de la diode.

Dans une forme de réalisation, ce dispositif est remarquable en ce que le guide d'onde lumineuse est du type à gradient d'indice de diamètre de cœur 50 $\mu m$ ou bien 85 $\mu m$ et d'ouverture numérique 0,2.

Dans ces conditions, le dispositif selon l'invention est adapté au couplage des fibres optiques selon les deux standards en vigueur dans le domaine des télécommunications, les sources lumineuses employées étant communément des diodes électroluminescentes de surface émettrice très inférieure à la surface de la face d'entrée des fibres.

Dans une forme de réalisation de l'invention, ce dispositif est remarquable en ce que le milieu séparant l'optique de transport de la face d'entrée du guide d'onde et de la lentille-boule est l'air.

Dans une autre forme de réalisation de l'invention, ce dispositif est remarquable en ce qu'une lame transparente est interposée entre la face d'entrée du guide d'onde lumineuse et l'optique de transport.

Dans une telle forme de réalisation, ce dispositif peut être remarquable en ce qu'il comprend un capot de protection des deux optiques convergentes et de la source lumineuse dont la lame transparente constitue la fenêtre.

Dans ces conditions, le dispositif selon l'invention peut répondre à des spécifications particulièrement sévères pour utilisation en ambiance spéciale, par exemple sous-marine ou bien dans des gaz dont la composition pourrait détériorer la diode électroluminescente.

De plus, les angles d'incidence sur toutes les surfaces optiques sont relativement faibles et le gain énergétique est très proche du gain théorique (les seules pertes étant dues aux pertes dites de Fresnel).

La description de deux exemples de réalisation du dispositif de couplage selon l'invention permettra de mieux comprendre cette dernière. Cette description sera illustrée par:

La figure 1, qui représente le dispositif de couplage en coupe selon l'axe optique, et;

la figure 2, qui représente le même dispositif dans le cas où lui est adjointe une lame destinée à servir de fenêtre à un capot de fermeture.

La figure 3 qui représente le trajet suivi par les rayons lumineux dans le dispositif de couplage.

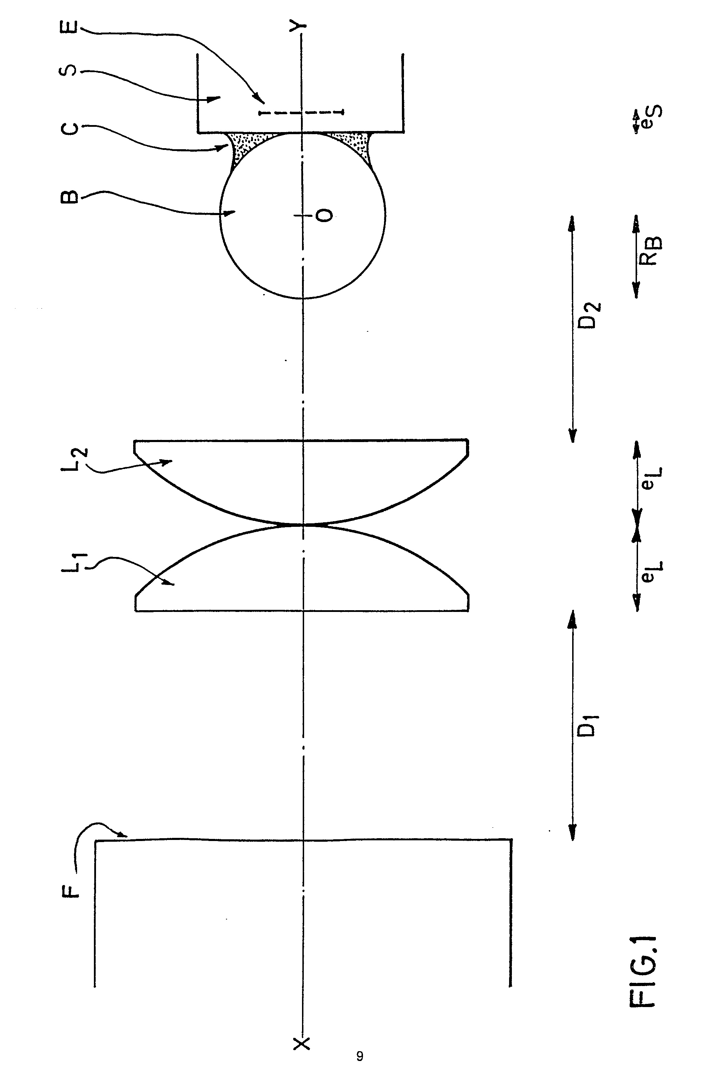

Tel que représenté sur la figure 1, le dispositif selon l'invention est destiné à réaliser le couplage entre un guide d'onde lumineuse de face d'entrée F, de diamètre de cœur $D_F$ et une source lumineuse S dont le diamètre de la surface émettrice E est $D_S < D_F$.

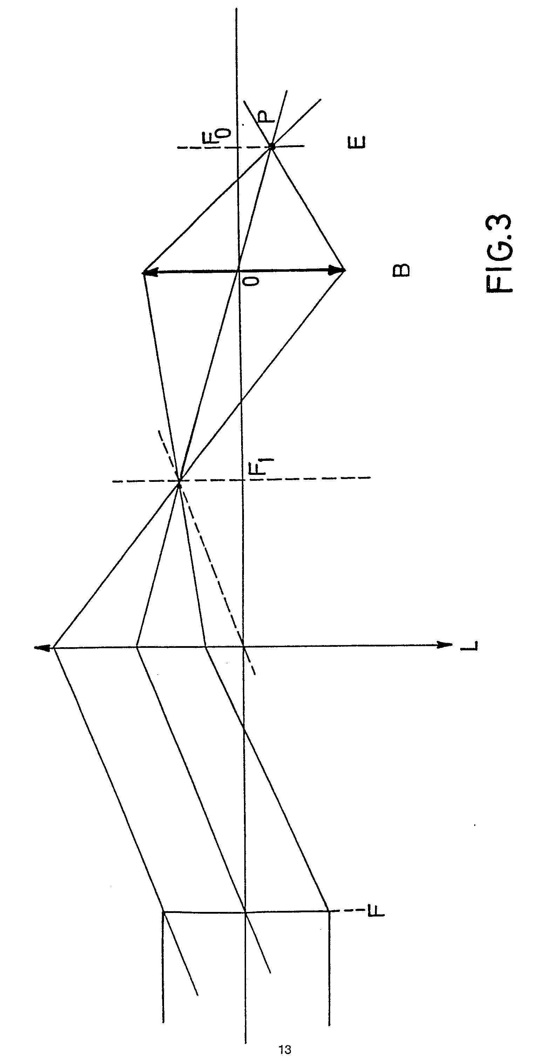

Le dispositif de couplage comprend une première optique convergente constituée par une lentille complètement sphérique dite lentille-boule B, destinée à former l'image de la surface émettrice E placée en $F_0$, dans le plan $F_1$, comme il est montré sur la figure 3.

La lentille-boule est fixée, à l'aide d'une colle transparente au rayonnement émis, soit directement sur la surface émettrice, soit sur la face externe de la source lumineuse dans le cas où la surface émettrice se trouve en retrait par rapport à cette face externe (Figure 1).

Le diamètre $D_B$ de la lentille-boule et son indice $N_B$ sont choisis, en tenant compte de l'indice $N_C$ de la colle et de la distance de la surface émettrice pour que la condition de formation de l'image de la surface émettrice E dans le plan $F_1$, foyer de l'optique de transport L, soit réalisée (Figure 3).

Pour obtenir ce résultat, l'indice de réfraction $N_C$ de la colle doit être aussi proche que possible d'une valeur qui se situe entre la valeur $N_B$ de l'indice de réfraction de la lentille-boule et la valeur $N_S$ de l'indice de réfraction de la source lumineuse S.

Le dispositif de couplage comprend ensuite une seconde optique convergente L destinée à former l'image de son foyer $F_1$ à l'infini dans le guide d'onde, c'est-à-dire l'image du centre 0 de la lentille-boule sur la face d'entrée F du guide d'onde lumineuse, en grandissement voisin de $-1$ (Figure 3).

Ce dispositif se distingue ainsi de la lentille-boule utilisée dans l'art antérieur cité, qui formait l'image de la surface émettrice sur la face d'entrée d'une fibre optique.

Dans une forme de réalisation de l'invention, cette seconde optique convergente L, dite de transport, est constituée de deux lentilles plan-convexes identiques $L_1$ et $L_2$, dont les faces convexes sont tournées en regard l'une de l'autre, et sont en contact l'une avec l'autre (Figure 1).

Le chemin optique $D_1$ entre la face d'entrée F du guide d'onde et la face plane en regard de la première lentille $L_1$ de l'optique de transport est pratiquement égal au chemin optique $D_2$ entre la face plane de la seconde lentille $L_2$ en regard de la lentille-boule et le centre 0 de cette dernière.

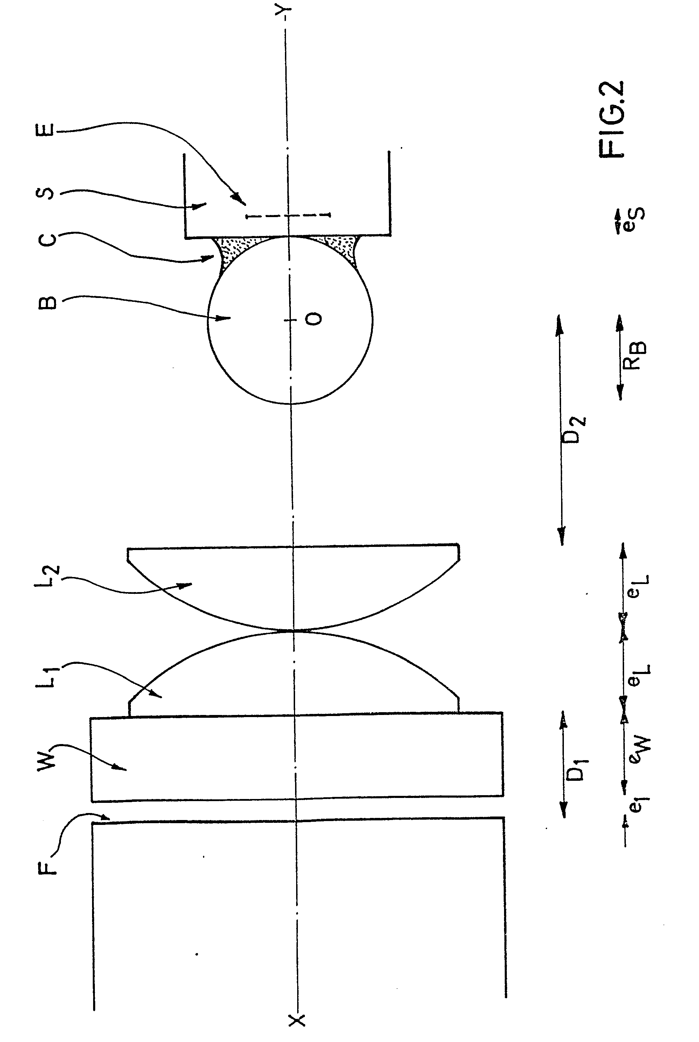

Dans certaines conditions d'utilisation, on peut être amené à désirer protéger le système optique et la source lumineuse. On peut, à cet effet, concevoir un capot de protection muni d'une fenêtre W destinée à laisser passer le rayonnement (Figure 2). Or la distance $D_1$ entre la face d'entrée F du guide d'onde et la face plane de la première lentille $L_1$ est suffisamment grande dans le dispositif proposé, pour permettre d'y placer cette fenêtre. La distance $D_1$ sera alors calculée en fonction de l'épaisseur $e_W$ et de l'indice $N_W$ de la fenêtre W, pour que le chemin optique $D_1$ parcouru reste égal au chemin optique $D_2$ entre la face plane de la seconde lentille $L_2$ et le centre 0 de la lentille-boule.

Le diamètre de cœur du guide d'onde F étant $D_F$ et le diamètre de la surface émissive de la source étant $D_S$, on définit

$$\mu = \frac{D_S}{D_F}$$

Le gain théorique du système est alors donné par la relation:

$$G = \frac{1}{\mu^2 (1+\mu^2/4)}$$

Cette relation étant d'ailleurs applicable au dispositif selon l'art antérieur comme donnée page 108 du document cité.

Exemple de réalisation n° 1

La source lumineuse S est une diode électroluminescente en arséniure de gallium (GaAs) dont la surface émissive présente un diamètre:

$$D_S \simeq 30 \,\mu m$$

Le guide d'onde lumineuse est une fibre optique à gradient d'indice qui peut aussi bien présenter un diamètre de cœur: $D_{F_1} \simeq 50 \,\mu m$ selon l'ancien standard utilisé en télécommunication, qu'un diamètre de cœur:

$D_{F_2} \simeq 85 \,\mu m$ selon le nouveau standard, et une ouverture numérique:

$$Sin\, u_F \simeq 0,2$$

Le diamètre de la lentille-boule est:

$D_B \simeq 216 \,\mu m$, soit environ 7 fois le diamètre de la surface émissive de la diode, et son indice est

$N_B \simeq 1,94$, ce qui rend admissible le fait que la lentille-boule ne soit pas en contact direct avec la surface émissive mais avec la face externe de la diode, si cette dernière est du type enterré. On peut admettre grâce au présent montage que la surface émissive soit jusqu'à une distance $e_S \simeq 5 \,\mu m$ en retrait par rapport à la face externe de la diode. Cette lentille-boule peut être réalisée en verre dense par exemple un verre au plomb ou bien un verre au lanthane.

La colle utilisée pour la fixation de la lentille-boule sur la diode est une résine époxy d'indice:

$$N_S = 1,56$$

L'indice N d'une colle idéale pour réaliser ce collage devrait être compris entre l'indice $N_B$ de la lentille-boule et l'indice $N_S$ de la surface émissive, c'est-à-dire:

$$N_B \leqslant N \leqslant N_S$$

Mais une telle colle n'étant pas disponible dans l'état de la technique, la présente colle est utilisée comme étant adaptée au mieux à sa fonction puisqu'elle fournit de bons résultats.

L'optique de transport L est formée de deux lentilles $L_1$ et $L_2$, plan-convexes dont les convexités sont tournées en regard l'une de l'autre. Leur diamètre est:

$$D_L = 3 \,mm \text{ et leur indice}$$
$$N_L = 1,75$$

Elles peuvent à cet effet être réalisées en rubis ou un flint dense.

Ces lentilles présentent une épaisseur:

$e_L = 0,9 \,mm$ le long de l'axe optique et un rayon de courbure des faces convexes:

$$R_L = 2,2 \,mm$$

La distance entre la face d'entrée de la fibre optique et la face plane de la première lentille $L_1$ est:

$$D_1 \simeq 3,13 \,mm$$

Cette distance mesurée dans l'air est pratiquement égale à la distance $D_2$ entre la face plane de la seconde lentille $L_2$ et le centre 0 de la lentille-boule soit:

$$D_2 \simeq D_1 \simeq 3,13 \,mm$$

La lentille-boule étant fixée sur la diode, le réglage optique de mise au point du système est effectué par déplacement de l'optique de transport le long de l'axe optique défini par l'axe perpendiculaire à la fois à la face d'entrée de la fibre optique et à la surface de la diode électroluminescente, passant par le centre de ces surface, le centre 0 de la lentille-boule se trouvant également sur cet axe.

La dimension de l'optique de transport réalisée selon l'invention, rend ces réglages faciles du fait que cette optique est très manipulable.

La diode électroluminescente fournit à travers l'ensemble des deux optiques formant le dispositif de couplage, une surface unie fortement éclairée de 100 $\mu m$ de diamètre dans laquelle on peut placer aisément la face d'entrée de la fibre optique quel que soit son diamètre (50 ou 85 $\mu m$).

L'indice des lentilles de l'optique de transport est suffisamment élevé pour minimiser les aberrations géométriques engendrées par ces lentilles. Les angles d'incidence le long du montage restent toujours inférieurs à 60°, ce qui permet d'obtenir un gain réel proche de la valeur théorique.

$$G_{théorique} = 2,55$$
$$G_{réel} = 2,1$$

Enfin ce dispositif de couplage peut être protégé par un capot d'étanchéité. La partie mécanique de ce capot ne sera pas décrite ici, comme ne faisant pas à proprement parler partie de l'invention.

Un tel capot d'étanchéité doit être doté d'une fenêtre W comme il est représenté sur la figure 2. Cette fenêtre est constituée par une lame à faces parallèles réalisée en un matériau transparent au rayonnement émis par la diode électroluminescente. Elle est interposée entre la face plane de la lentille $L_1$ et en contact avec celle-ci, et la face d'entrée de la fibre optique. Elle peut être réalisée par exemple en silice. Elle présente dans ces conditions une épaisseur:

$$e_w = 2,5 \, mm$$
et un indice $N_w = 1,46$

La fibre optique doit alors être approchée jusqu'à une distance $e_1$ d'environ 190 μm de la face externe de cette fenêtre.

Le trajet optique entre la face d'entrée de la fibre optique et la face plane de la première lentille $L_1$ est toujours le même que le trajet optique entre la face plane de la seconde lentille $L_2$ et le centre 0 de la lentille-boule, mais le trajet réel $D'_1$ est plus court que le trajet réel $D_2$ puisqu'il tient compte de la traversée de la fenêtre.

$$D'_1 \simeq 2,69 \, mm$$

Exemple de réalisation n° 2

Cet exemple de réalisation se distingue du précédent simplement par le fait que les lentilles plan-convexes présentent une plus grande épaisseur mesurée sur l'axe optique, ce qui les rend moins fragiles et encore mieux manipulables. La source lumineuse est ici encore une diode électroluminescente du type enterré en arséniure de gallium (GaAs) et le guide d'onde est une fibre optique à gradient d'indice.

Pour une meilleur compréhension, les valeurs caractérisant les différents éléments du dispositif de couplage selon l'invention sont rassemblées dans le tableau I, permettant ainsi de mieux comparer les deux exemples de réalisation.

Les valeurs de $D'_1$ et $D_2$ sont données dans ce tableau dans le cas où une fenêtre de l'épaisseur $E_w$ indiquée est interposée de la façon qui a été décrite précédemment.

Il est évident que d'autres exemples de réalisation de ce dispositif de couplage peuvent être conçus sans pour autant sortir du cadre de la présente invention tel que défini par les revendications ci-après annexées.

## TABLEAU I

| Exemple n° 1 | | Exemple n° 2 | |
|---|---|---|---|
| S = Diode électroluminescente en GaAs | | S = Diode électroluminescente en GaAs | |
| $D_S$ | = 30 μm | $D_S$ | = 30 μm |
| $e_S$ | ≤ 5 μm | $e_S$ | ≤ 5 μm |
| $D_{F1}$ | = 50 μm | $D_{F1}$ | = 50 μm |
| $D_{F2}$ | = 85 μm | $D_{F2}$ | = 85 μm |
| Sin $u_F$ | = 0,2 | Sin $u_F$ | = 0,2 |
| F = Fibre à gradient d'indice | | F = Fibre à gradient d'indice | |
| $D_B$ | = 210 μm | $D_B$ | = 216 μm |
| $N_B$ | = 1,94 | $N_B$ | = 1,94 |
| $N_C$ | = 1,56 | $N_C$ | = 1,56 |
| $D_L$ | = 3 mm | $D_L$ | = 3 mm |
| $N_L$ | = 1,75 | $N_L$ | = 1,75 |
| $e_L$ | = 0,9 mm | $e_L$ | = 2,18 mm |
| $e_w$ | = 2,5 mm | $e_w$ | = 1,5 mm |
| $N_w$ | = 1,46 | $N_w$ | = 1,46 |
| $D'_1$ | = 2,69 mm | $D'_1$ | = 1,51 mm |
| $e_1$ | = 190 μm | $e_1$ | = 100 μm |
| $D_2$ | = 3,13 mm | $D_2$ | = 2,43 mm |
| $G_{théorique}$ | = 2,55 | $G_{théorique}$ | = 2,55 |
| $G_{réel}$ | = 2,1 | $G_{réel}$ | = 2,1 |

## Revendications

1. Dispositif de couplage d'une source lumineuse et d'un guide d'onde lumineuse, la surface émettrice de la source lumineuse présentant des dimensions de même ordre de grandeur que celles du cœur du guide d'onde, ou bien des dimensions inférieures, ce dispositif incluant une première optique convergente constituée par une lentille de forme complètement sphérique, dite lentille-boule, caractérisé en ce qu'elle comprend en outre une seconde optique convergente, dite de transport, qui peut fournir une image, en grandissement voisin de −1, de la face d'entrée du guide d'onde, dans le centre optique de la lentille-boule, et en ce que l'indice de réfraction et le diamètre de la lentille-boule sont choisis de manière à ce que les rayons issus de chaque point de la face émettrice de la source lumineuse entrent dans le guide d'onde sous la forme de faisceaux de rayons parallèles, la face émettrice se trouvant au foyer objet du dispositif de couplage.

2. Dispositif selon la revendication 1, caractérisé en ce que la lentille-boule est maintenue en contact avec la source lumineuse à l'aide d'une colle, dont l'indice de réfraction présente une valeur comprise entre celle de l'indice de réfraction de la lentille-boule et celle de l'indice de réfraction de la surface émettrice de la source lumineuse, ou bien une valeur aussi proche que possible de cette fourchette de valeurs idéales.

3. Dispositif selon l'une des revendications 1 ou 2, caractérisé en ce que l'optique de transport est constituée de deux lentilles plan-convexes identiques, dont les faces convexes sont tournées en regard l'une de l'autre et en contact, la face plane de l'une de ces lentilles, dite première lentille, étant tournée vers la face d'entrée du guide d'onde et étant placée à une distance optique D de cette dernière, la face plane de l'autre lentille dite seconde lentille étant tournée vers la lentille-boule et étant placée à la même distance optique D du centre optique de cette dernière, et l'axe optique des deux lentilles passant par le centre optique de la lentille-boule et coïncidant avec les perpendiculaires aux centres de la face d'entrée du guide d'onde d'une part et de la face émettrice de la source lumineuse d'autre part.

4. Dispositif selon l'une des revendications 1 à 3, caractérisé en ce que la source lumineuse est une diode électroluminescente.

5. Dispositif selon la revendication 4, caractérisé en ce que la diode électroluminescente présente une surface émissive dont le diamètre est de l'ordre de 30 µm, cette surface émissive étant enterrée d'au plus 5 µm par rapport à la surface externe de la diode.

6. Dispositif selon l'une des revendications 1 à 5, caractérisé en ce que le guide d'onde lumineuse est du type à gradient d'indice de diamètre de cœur 50 µm et d'ouverture numérique ≃ 0,2.

7. Dispositif selon l'une des revendications 1 à 5, caractérisé en ce que le guide d'onde lumineuse est du type à gradient d'indice de diamètre de cœur 85 µm et d'ouverture numérique de l'ordre de 0,2.

8. Dispositif selon l'une des revendications 1 à 7, caractérisé en ce que le milieux séparant l'optique de transport de la face d'entrée du guide d'onde et de la lentille-boule est l'air.

9. Dispositif selon l'une des revendications 1 à 7, caractérisé en ce qu'une lame transparente est interposée entre la face d'entrée du guide d'onde lumineuse et l'optique de transport.

10. Dispositif selon la revendication 9, caractérisé en ce qu'il comprend un capot de protection des deux optiques convergentes et de la source lumineuse dont la lame transparente constitue la fenêtre.

**Claims**

1. A device for coupling a light source and an optical waveguide, which light source has an emission surface whose dimensions are of the same order of magnitude as, or smaller than those of the core of the waveguide, which device comprises a first convergent optical system constituted by a lens having a completely spherical shape, referred to as ball lens, characterized in that it further comprises a second convergent optical system, or transfer system, which can form an image, with a magnification of approximately −1, of the input face of the waveguide in the optical centre of the ball lens and in that the refractive index and the diameter of the ball lens are such that the rays issuing from any point of the emission surface of the light source enter the waveguide as a parallel beam, which emission surface is situated in the object focal point of the coupling device.

2. A device as claimed in Claim 1, characterized in that the ball lens is held in contact with the light source by means of an adhesive whose refractive index has a value between the value of the refractive index of the ball lens and the value of the refractive index of the emission surface of the light source, or a value as close as possible to this range of ideal values.

3. A device as claimed in Claim 1 or 2, characterized in that the optical transfer system comprises two identical planoconvex lenses, whose convex surfaces face each other and are in contact with each other, the plane surface of one of said lenses, referred to as the first lens, facing the input face of the waveguide and being arranged at an optical distance D from said input face, the plane surface of the other lens, referred to as the second lens, facing the ball lens and being arranged at the same optical distance D from the optical centre of said ball lens, and the optical axes of the two lenses extending through the optical centre of the ball lens and coinciding with the normals to the centres of the input face of the waveguide and the emission surface of the light source.

4. A device as claimed in any one of the Claims 1 to 3, characterized in that the light source is a light-emitting diode.

5. A device as claimed in Claim 4, characterized in that the light-emitting diode has an emission surface whose diameter is of the order of 30 µm, which emission surface recedes at the most 5 µm relative to the outer surface of the diode.

6. A device as claimed in any one of the Claims 1 to 5, characterized in that the optical waveguide is of the graded-index type having a core diameter of 50 µm and a numerical aperture ≃ 0.2.

7. A device as claimed in any one of the Claims 1 to 5, characterized in that the optical waveguide is of the graded-index type, having a core diameter of 85 µm and a numerical aperture of the order of 0.2.

8. A device as claimed in any one of the Claims 1 to 7, characterized in that the medium separating the optical transfer system from the input face of the optical waveguide and from the ball lens is air.

9. A device as claimed in any one of the Claims 1 to 7, characterized in that a transparent plate is arranged between the input face of the optical waveguide and the optical transfer system.

10. A device as claimed in Claim 9, characterized in that it comprises a protective housing for the two convergent optical systems and the light source, the transparent plate forming the window of said housing.

**Patentansprüche**

1. Vorrichtung zum Kuppeln einer Lichtquelle mit einem Lichtwellenleiter, wobei die Austrittsfläche der Lichtquelle die gleichen Abmessungen wie die des Lichtquellenleiterkernes oder kleinere Abmessungen aufweist und die Vorrichtung eine erste konvergierende Optik enthält, die aus einer ganz sphärischen Linse, mit der Bezeichnung Kugellinse, besteht, dadurch gekennzeichnet, daß sie außerdem eine zweite konvergierende Optik, mit der Bezeichnung Übertragungsoptik, enthält, die ein Bild mit einem ungefähren Abbildungsmaßstab von −1 von der Eintrittsfläche des Wellenleiters in die optische Mitte der Kugellinse liefern kann, und daß der Brechungsindex und der Durchmesser der Kugellinse derart gewählt sind, daß die von jedem Punkt der Austrittsfläche der Lichtquelle ausgehenden Strahlen in Form von parallelen Strahlungsbündeln in den Lichtwellenleiter eintreten und die Austrittsfläche sich dabei im vorderen Objektivbrennpunkt der Kupplungsvorrichtung befindet.

2. Vorrichtung nach Anspruch 1, dadurch gekennzeichnet, daß die Kugellinse über ein Klebmittel mit der Lichtquelle in Kontakt steht, wobei der Brechungsindex des Klebmittels einen Wert zwischen dem des Brechungsindexes der Kugellinse und dem des Brechungsindexes der Austrittsfläche der Lichtquelle oder auch einen Wert darstellt, der möglichst nahe beim Gebiet der idealen Werte liegt.

3. Vorrichtung nach einem der Ansprüche 1 oder 2, dadurch gekennzeichnet, daß die Übertragungsoptik aus zwei gleichen plankonvexen Linsen besteht, deren konvexe Flächen einander zugewandt sind und miteinander in Kontakt stehen, wobei die ebene Fläche einer Linse, die mit erster Linse bezeichnet wird, der Eintrittsfläche des Lichtwellenleiters zugewandt ist und sich in einem optischen Abstand D von dieser Eintrittsfläche befindet, wobei die ebene Fläche der anderen Linse, die mit zweiter Linse bezeichnet wird, der Kugellinse zugewandt ist und sich im gleichen optischen Abstand D von der optischen Mitte dieser Kugellinse befindet, und die optische Achse der beiden Linsen durch die optische Mitte der Kugellinse geht und mit den Senkrechten zu den Mitten einerseits der Eintrittsflächen des Lichtwellenleiters und andererseits der Eintrittsfläche der Lichtquelle zusammenfällt.

4. Vorrichtung nach einem der Ansprüche 1 bis 3, dadurch gekennzeichnet, daß die Lichtquelle eine elektrolumineszierende Diode ist.

5. Vorrichtung nach Anspruch 4, dadurch gekennzeichnet, daß die elektrolumineszierende Diode eine emittierende Oberfläche mit einem Durchmesser in der Größenordnung von 30 μm hat, wobei diese emittierende Oberfläche gegen die externe Oberfläche der Diode höchstens 5 μm inwärts liegt.

6. Vorrichtung nach einem der Ansprüche 1 bis 5, dadurch gekennzeichnet, daß der Lichtwellenleiter vom Index-gradienten Typ mit einem Kerndurchmesser von 50 μm eine numerische Apertur ungefähr gleich 0,2 hat.

7. Vorrichtung nach einem der Ansprüche 1 bis 5, dadurch gekennzeichnet, daß der Lichtwellenleiter vom Index-gradienten Typ mit einem Kerndurchmesser von 85 μm eine numerische Apertur in der Größenordnung von 0,2 hat.

8. Vorrichtung nach einem der Ansprüche 1 bis 7, dadurch gekennzeichnet, daß das Mittel zwischen der Übertragungsoptik der Eintrittsfläche des Lichtwellenleiters und der Kugellinse Luft ist.

9. Vorrichtung nach einem der Ansprüche 1 bis 7, dadurch gekennzeichnet, daß zwischen der Eintrittsfläche des Lichtwellenleiters und der Übertragungsoptik eine transparente Lamelle angeordnet ist.

10. Vorrichtung nach Anspruch 9, dadurch gekennzeichnet, daß sie eine Schutzkappe für die zwei konvergierenden Optiken und für die Lichtquelle enthält, für die die transparente Lamelle das Fenster bildet.

FIG.1

FIG.2

FIG.3

EP 0 177 104 B1